# FASCICULE DE BREVET EUROPEEN

(11) **EP 1 053 670 B1**
(45) Date de publication et mention de la délivrance du brevet: **14.01.2004**
(21) Numéro de dépôt: 00440121.2
(22) Date de dépôt: 03.05.2000
(51) Int. Cl.: A01D 34/86

(54) **Machine de fauchage**
Böschungsmäher
Brush cutting machine

(30) Priorité: 20.05.1999 FR 9906549
(43) Date de publication de la demande: 22.11.2000
(73) Titulaire: Kuhn-Audureau S.A., 85260 La Copechagniere (FR)
(72) Inventeur: Rostoucher, Guy, 85170 Belleville sur Vie (FR); Gaillard, Louis-Marc Bâtiment 3, appartement 99, 85000 La Roche sur Yon (FR); Peterschmitt, Mickael, 85300 Le Perrier (FR)
(74) Mandataire: Andres, Jean-Claude

(56) Documents cités:
- DE-A- 3 218 525
- DE-A- 19 611 281
- FR-A- 2 612 363
- FR-A- 2 779 903

## Description

La présente invention se rapporte à une machine de fauchage comportant un bâti pouvant être accroché à un tracteur et portant un bras porte-outil qui est réalisé en au moins une partie intérieure qui est articulée au moyen d'un axe sensiblement horizontal sur un support du bâti et au moins une partie extérieure qui est articulée sur ladite partie intérieure au moyen d'un axe sensiblement horizontal et qui porte un outil de coupe. La partie intérieure du bras peut être déplacée autour de son axe d'articulation au moyen d'un premier vérin hydraulique qui se situe entre ladite partie intérieure et le support du bâti et qui possède un cylindre dans lequel se déplace une tige avec un piston.

De telles machines sont connues par les documens FR-A-2 779 903 et DE 3 218 525.

Les machines de fauchage de ce type sont essentiellement destinées à la coupe de l'herbe et de broussailles, par exemple sur les prairies, les bordures de routes, les fossés et les talus ou à la coupe des haies ou des branches des arbres.

Sur des machines connues de ce genre, le premier vérin hydraulique est du type à simple effet. Ce vérin permet de déplacer le bras porte-outil autour de l'axe d'articulation de la partie intérieure du bras, en vue de régler la position de l'outil de coupe. Le déplacement dudit bras vers le haut s'effectue au moyen du vérin hydraulique. Son déplacement vers le bas s'effectue sous l'effet de son propre poids. Un tel agencement permet notamment à l'outil de coupe d'épouser les dénivellations du sol sans intervention de l'opérateur. Le poids de l'outil, avec le déport important lorsque le bras est déployé, fait que l'ensemble exerce une force suffisante pour maintenir l'outil dans la position choisie par l'opérateur.

Toutefois, lorsque le bras porte-outil est levé dans une position dans laquelle le centre de gravité de l'ensemble constitué par le bras et l'outil de coupe passe au-delà d'un plan vertical passant par l'axe d'articulation de la partie intérieure du bras sur le support du bâti, l'opérateur perd le contrôle de la position dudit bras. Ce dernier bascule alors brusquement autour de son axe d'articulation avec le support, jusqu'à ce que le premier vérin hydraulique soit totalement allongé. Ce basculement peut provoquer une déstabilisation de la machine et du tracteur.

La présente invention a pour but de remédier aux inconvénients précités des machines connues, à l'aide de moyens simples et fonctionnant d'une manière relativement sûre.

A cet effet, une importante caractéristique de l'invention consiste en ce que le cylindre du premier vérin hydraulique comporte près de l'une de ses extrémités un premier orifice d'entrée et de sortie d'huile qui est relié au moyen d'un tuyau à un distributeur hydraulique et près de son autre extrémité un deuxième orifice qui est également relié au distributeur hydraulique au moyen d'un tuyau et un troisième orifice qui est relié à un réservoir et qui est obturé automatiquement par le piston ou la tige de ce premier vérin hydraulique lorsque ladite tige est proche de la position où elle est sortie au maximum du cylindre.

Dans ce mode de réalisation le vérin hydraulique travaille en mode simple effet sur la majeure partie de sa course, en vue de faciliter le suivi des dénivellations du sol. L'huile qui se situe du côté du cylindre qui comporte le troisième orifice sort librement vers le réservoir et n'a aucun effet sur le piston. Par contre, ce vérin hydraulique passe automatiquement en mode double effet, par suite de l'obturation du troisième orifice, lorsque le centre de gravité du bras et de l'outil se rapproche du plan vertical passant par l'axe d'articulation dudit bras sur le support du bâti. Ce vérin hydraulique empêche alors le bras de basculer autour dudit axe d'articulation. L'opérateur garde ainsi le contrôle de la position du bras de l'outil de coupe.

Le passage du mode simple effet au mode double effet et vice versa s'effectue sans pièce de commande extérieure au vérin hydraulique. De ce fait il n'y a pas de risque d'un mauvais fonctionnement dû à une défectuosité sur une telle pièce de commande. De plus, l'agencement selon l'invention est très simple.

D'autres caractéristiques et avantages de l'invention ressortiront de la description qui va suivre et qui se réfère aux dessins annexés qui représentent, à titre d'exemple non limitatif, une forme de réalisation selon l'invention.

Dans ces dessins :
- la figure 1 représente une vue arrière d'une machine selon l'invention en position de travail.
- la figure 2 représente, à plus grande échelle, une vue de détail du premier vérin hydraulique.
- la figure 3 représente, à plus grande échelle, une coupe partielle du premier vérin hydraulique.

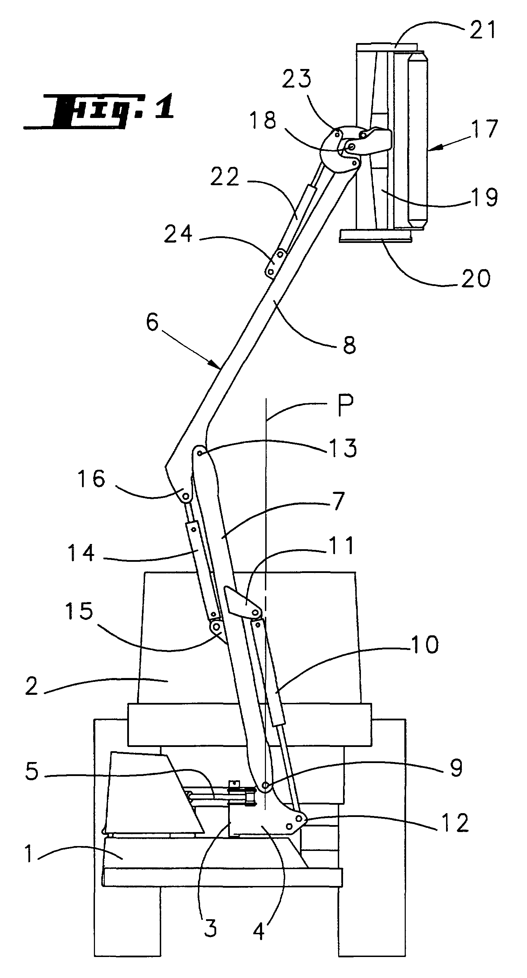

Telle qu'elle est représentée sur la figure 1, la machine selon l'invention comporte un bâti (1) pouvant être accroché au dispositif de relevage d'un tracteur (2). Le bâti (1) possède un axe (3) sensiblement vertical sur lequel est articulé un support (4). Un vérin hydraulique (5) sensiblement horizontal est relié audit support (4) et permet de le déplacer autour de l'axe (3). Sur ce support (4) est articulé un bras porte-outil (6) qui est réalisé en au moins deux parties (7 et 8) en forme de poutres et qui sont repliables l'une par rapport à l'autre. La partie intérieure (7) est articulée avec son extrémité inférieure sur le support (4) au moyen d'un axe (9) sensiblement horizontal. Cette partie intérieure (7) est déplaçable autour dudit axe (9) au moyen d'un premier vérin hydraulique (10). Celui-ci est articulé sur des pattes (11) solidaires de la partie intérieure (7) et sur des pattes (12) du support (4). La partie extérieure (8) du bras porte-outil (6) est articulée sur la partie intérieure (7) à l'aide d'un axe (13) sensiblement horizontal. Cette partie extérieure (8) est déplaçable autour de l'axe (13) au moyen d'un deuxième vérin hydraulique (14). Ce dernier est articulé sur des pattes (15) de la partie intérieure (7) et des pattes (16) prévues sur ladite partie extérieure (8). Un outil de coupe (17) est articulé au moyen d'un axe (18) sur l'extrémité libre de la deuxième partie (8) du bras (6). Cet outil de coupe (17) se compose notamment d'un rotor qui est équipé de couteaux ou de fléaux sur sa périphérie et qui peut être entraîné en rotation par un moteur hydraulique. Ce rotor est partiellement entouré par un capot de protection (19) qui est muni de patins latéraux (20 et 21) pouvant glisser sur le sol. Cet outil de coupe (17) est déplaçable autour de son axe d'articulation (18) à l'aide d'un troisième vérin hydraulique (22) qui est articulé sur des pattes (23) dudit outil (17) et sur des pattes (24) de la partie extérieure (8) du bras (6). Les vérins hydrauliques précités (5, 10, 14 et 22) sont reliés à une centrale hydraulique qui peut être sur la machine ou sur le tracteur (2). Leurs déplacements sont commandés par l'opérateur au moyen de distributeurs hydrauliques qu'il peut actionner depuis le tracteur (2).

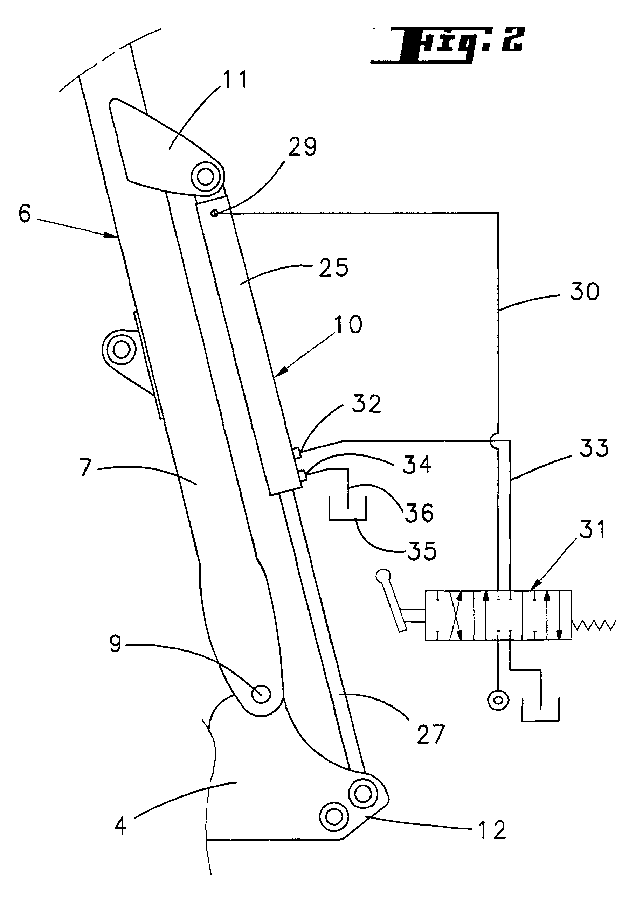

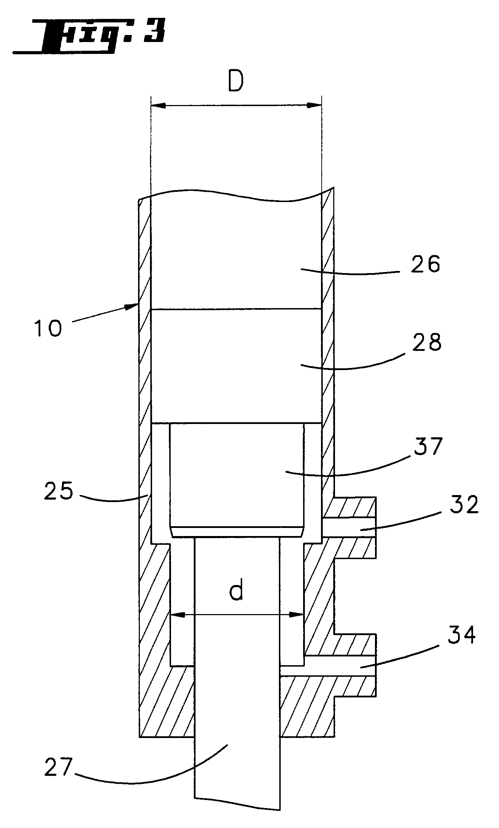

Comme cela ressort notamment des figures 2 et 3, le premier vérin hydraulique (10) possède un cylindre (25) avec un alésage (26) dans lequel se déplace une tige (27) avec un piston (28). Ledit cylindre (25) comporte, près de son extrémité supérieure qui est articulée au bras porte-outil (6), un premier orifice (29) d'entrée et de sortie d'huile. Cet orifice (29) est relié par l'intermédiaire d'un tuyau (30) à un distributeur hydraulique (31) qui commande l'arrivée et la sortie de l'huile de la partie du cylindre (25) qui se situe entre son extrémité supérieure et le piston (28). Ce cylindre (25) comporte près de son extrémité inférieure un deuxième orifice (32). Celui-ci est également relié par l'intermédiaire d'un tuyau (33) au distributeur hydraulique (31) qui commande ainsi l'arrivée et la sortie de l'huile de la partie du cylindre (25) qui se situe entre son extrémité inférieure et le piston (28). Ce cylindre (25) comporte près du deuxième orifice (32) un troisième orifice (34) qui est relié à un réservoir (35) au moyen d'un tuyau (36). Ce troisième orifice (34) est obturable automatiquement par le piston (28) ou la tige (27) du premier vérin hydraulique (10) lorsque ladite tige (27) est proche de la position où elle est sortie au maximum du cylindre (25).

Dans l'exemple représenté, la tige (27) comporte un épaulement (37). L'alésage intérieur (26) du cylindre (25) présente dans la partie où se situe le troisième orifice (34) un diamètre (d) qui est légèrement inférieur au diamètre (D) de la partie dudit alésage (26) qui comporte le premier et le deuxième orifices (29 et 32). De plus, le diamètre réduit (d) correspond au diamètre de l'épaulement (37). Lorsqu'en se déplaçant ce dernier arrive dans la partie de l'alésage avec le diamètre réduit (d), il coupe l'accès de l'huile vers le troisième orifice (34), mais laisse le deuxième orifice (32) ouvert.

Le piston (28) et la tige (27) sont réalisés de telle sorte que ledit piston (28) se situe entre le premier orifice (29) et le deuxième orifice (32). L'huile arrivant par le premier orifice (29) provoque un déplacement du piston (28) et de la tige (27) de telle sorte que le vérin (10) s'allonge. Par contre, l'huile arrivant dans le cylindre (25) par le second orifice (32) ressort par le troisième orifice (34) lorsque celui-ci est ouvert. Elle n'a alors aucun effet sur le piston (28) et la tige (27). Dans cette position le premier vérin hydraulique (10) travaille en mode simple effet. Lorsque l'accès au troisième orifice (34) est fermé par l'épaulement (37), l'huile arrivant dans le cylindre (10) par le deuxième orifice (32) déplace le piston (28) et la tige (27) de telle sorte que le vérin (10) se raccourcisse. Celui-ci travaille alors en mode double effet.

Durant le travail, l'outil de coupe (17) peut être éloigné ou rapproché du tracteur (2) et être déplacé en hauteur au moyen des parties (7 et 8) qui composent le bras (6). Ces parties (7 et 8) sont elles même déplaçable autour de leurs axes d'articulation (9 et 13) à l'aide du premier et du deuxième vérins hydrauliques (10 et 14). Le troisième vérin hydraulique (22) permet d'orienter l'outil de coupe (17) autour de son axe d'articulation (18).

Le rotor de l'outil de coupe (17) est alors entraîné en rotation par le moteur hydraulique. Pour la coupe de l'herbe ou de broussailles au niveau du sol, l'outil (17) glisse sur la surface du sol au moyen des patins (20 et 21). Il peut avantageusement suivre les dénivellations grâce au fait que dans cette position le premier vérin hydraulique (10) est en mode simple effet, ce qui permet à la partie intérieure (7) du bras (6) de pivoter librement vers le haut et le bas.

L'outil de coupe (17) peut également être levé au moyen du bras (6) pour le taillage des haies ou des branches des arbres (voir figure 1). Pour arriver dans cette position, le premier vérin hydraulique (10) est commandé au moyen du distributeur (31) de sorte qu'il s'allonge tandis que le deuxième vérin hydraulique (14) est commandé de sorte qu'il se raccourcisse. Le premier vérin hydraulique (10) est en mode simple effet sur la majeure partie de sa course. L'outil de coupe (17) reste alors dans la position choisie sous l'effet de son propre poids.

Si lors du relevage de l'outil de coupe (17) le premier vérin hydraulique (10) se rapproche de la position où il est entièrement allongé, l'épaulement (37) de la tige (27) s'introduit dans la partie de l'alésage (26) du cylindre (25) dont le diamètre est réduit et ferme l'accès de l'huile au troisième orifice (34). L'opérateur peut alors commander, à partir du distributeur (31), les déplacements de la tige (27) du premier vérin hydraulique (10) dans les deux sens. Il garde ainsi le contrôle de la position du bras (6) et de l'outil de coupe (17) même lorsque leur centre de gravité passe au-delà d'un plan vertical (P) passant par l'axe d'articulation (9) du bras (6) sur le support (4) du bâti (1). De cette façon, il peut empêcher le basculement brutal du bras (6) dans sa position extrême. Il peut aussi le faire revenir doucement vers le bas à partir de sa position extrême.

Pour le transport, la partie intérieure (7) du bras (6) peut être dirigée vers le haut à l'aide du premier vérin hydraulique (10) et la deuxième partie (8) peut être repliée vers le bas, autour de son axe (13), au moyen du deuxième vérin hydraulique (14). L'encombrement de l'ensemble est alors réduit.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel que défini dans les revendications. Il est par exemple possible d'utiliser deux vérins (10) au lieu d'un seul. Il est également possible de placer le premier vérin hydraulique (10) au-dessus du bras (6) de sorte qu'il tire sur la partie (7) pour la déplacer vers le haut. Dans ce cas, la position des orifices (29, 32 et 34) sur le cylindre (10) serait inversée par rapport à celle qui est représentée sur les figures 1 à 3.

## Revendications

1. Machine de fauchage comportant un bâti (1) pouvant être accroché à un tracteur et portant un bras porte-outil (6) qui est réalisé en au moins une partie intérieure (7) qui est articulée au moyen d'un axe sensiblement horizontal (9) sur un support (4) du bâti (1) et au moins une partie extérieure (8) qui est articulée sur ladite partie intérieure (7) au moyen d'un axe sensiblement horizontal (13) et qui porte un outil de coupe (17), laquelle partie intérieure (7) du bras (6) peut être déplacée autour de son axe d'articulation (9) au moyen d'un premier vérin hydraulique (10) qui se situe entre ladite partie intérieure (7) et le support (4) du bâti (1) et qui possède un cylindre (25) dans lequel se déplace une tige (27) avec un piston (28), ledit cylindre (25) comportant près de l'une de ses extrémités un premier orifice (29) d'entrée et de sortie d'huile qui est relié au moyen d'un tuyau (30) à un distributeur hydraulique (31), près de son autre extrémité un deuxième orifice (32) qui est relié au moyen d'un tuyau (33) au distributeur hydraulique (31) ***caractérisée par le fait* que** ledit cylindre (25) comporte un troisième orifice (34) qui est relié au moyen d'un tuyau (36) à un réservoir (35) et qui est obturé automatiquement par le piston (28) ou la tige (27) du premier vérin hydraulique (10) lorsque ladite tige (27) est proche de la position où elle est sortie au maximum du cylindre (25).

2. Machine selon la revendication 1, ***caractérisée par le fait* que** la tige (27) comporte un épaulement (37) pour obturer le troisième orifice (34).

3. Machine selon la revendication 2, ***caractérisée par le fait* que** le cylindre (25) du premier vérin hydraulique (10) comporte un alésage (26) qui possède dans la partie où se situe le troisième orifice (34) un diamètre (d) qui est inférieur au diamètre (D) de la partie qui comporte le premier et le deuxième orifices (29 et 32).

4. Machine selon les revendications 2 et 3, ***caractérisée par le fait* que** le diamètre (d) de l'alésage (26) du cylindre (25) du premier vérin hydraulique (10) correspond au diamètre de l'épaulement (37) de sa tige (27).

5. Machine selon l'une quelconque des revendications précédentes, ***caractérisée par le fait* que** le deuxième orifice (32) et le troisième orifice (34) se situent l'un près de l'autre.

6. Machine selon la revendication *5,* ***caractérisée par le fait* que** le piston (28) de la tige (27) du premier vérin hydraulique (10) se situe dans la position de travail entre le premier orifice (29) et les deuxième et troisième orifices (32 et 34).

7. Machine selon l'une quelconque des revendications précédentes, ***caractérisée par le fait* que** la tige (27) du premier vérin hydraulique (10) peut être actionnée dans les deux sens à partir du distributeur (31) lorsque le troisième orifice (34) est obturé.

## Claims

1. Mowing machine comprising a frame (1) that can be attached to a tractor and carries a tool-bearing arm (6) made of at least one inner part (7) articulated by means of a substantially horizontal axis (9) on a support (4) of the frame (1) and at least one outer part (8) articulated on the said inner part (7) by means of a substantially horizontal axis (13) and carrying a cutting tool (17), which inner part (7) of the arm (6) can be moved around its axis of articulation (9) by means of a first hydraulic ram (10) that is situated between the said inner part (7) and the support (4) of the frame (1) and has a cylinder (25) in which a rod (27) moves with a piston (28), the said cylinder (25) comprising, close to one of its ends, a first oil inlet and outlet orifice (29) that is linked by means of a pipe (30) to a hydraulic distributor (31) and, close to its other end, a second orifice (32) which is linked by means of a pipe (33) to the hydraulic distributor (31), ***characterized in* that** the said cylinder (25) comprises a third orifice (34) that is linked by means of a pipe (36) to a reservoir (35) and is automatically closed by the piston (28) or the rod (27) of the first hydraulic ram (10) when the said rod (27) is close to the position in which it has emerged from the cylinder (25) to the maximum.

2. Machine according to Claim 1, ***characterized in* that** the rod (27) comprises a shoulder (37) to close the third orifice (34).

3. Machine according to Claim 2, ***characterized in* that** the cylinder (25) of the first hydraulic ram (10) comprises a bore (26) which has, in the part in which the third orifice (34) is situated, a diameter (d) that is less than the diameter (D) of the part comprising the first and second orifices (29 and 32).

4. Machine according to Claims 2 and 3, ***characterized in* that** the diameter (d) of the bore (26) of the cylinder (25) of the first hydraulic ram (10) corresponds to the diameter of the shoulder (37) of its rod (27).

5. Machine according to any one of the preceding claims, ***characterized in* that** the second orifice (32) and the third orifice (34) are situated close to one another.

6. Machine according to Claim 5, ***characterized in* that** the piston (28) of the rod (27) of the first hydraulic ram (10) is situated in the working position between the first orifice (29) and the second and third orifices (32 and 34).

7. Machine according to any one of the preceding claims, ***characterized in* that** the rod (27) of the first hydraulic ram (10) can be actuated in both directions from the distributor (31) when the third orifice (34) is closed.

## Patentansprüche

1. Mähmaschine mit einem Rahmen (1), der an einem Traktor angehängt werden kann und einen Werkzeugtragarm (6) aufweist, der aus mindestens einem inneren Teil (7), der mittels einer im Wesentlichen horizontalen Achse (9) an einer Stütze (4) des Rahmens (1) angelenkt ist, und mindestens einem äußeren Teil (8), der mittels einer im Wesentlichen horizontalen Achse (13) am inneren Teil (7) angelenkt ist und ein Schneidwerkzeug (17) trägt, hergestellt ist, wobei der innere Teil (7) des Arms (6) mittels eines ersten Hydraulikzylinders (10), der sich zwischen dem inneren Teil (7) und der Stütze (4) des Rahmens (1) befindet und einen Rohrzylinder (25) besitzt, in dem sich eine Stange (27) mit einem Kolben (28) verschiebt, um seine Gelenkachse (9) bewegt werden kann, wobei der Rohrzylinder (25) nahe einem seiner Enden eine erste Öffnung (29) zum Einlass und Auslass von Öl, die mittels einer Röhre (30) mit einem Hydraulikverteiler (31) verbunden ist, und nahe seinem anderen Ende eine zweite Öffnung (32), die mittels einer Röhre (33) mit dem Hydraulikverteiler (31) verbunden ist, aufweist, ***dadurch gekennzeichnet,* dass** der Rohrzylinder (25) eine dritte Öffnung (34) aufweist, die mittels einer Röhre (36) mit einem Speicher (35) verbunden ist und durch den Kolben (28) oder die Stange (27) des ersten Hydraulikzylinders (10) automatisch verschlossen wird, wenn sich die Stange (27) nahe der Position befindet, in der sie maximal aus dem Rohrzylinder (25) herausgetreten ist.

2. Maschine nach Anspruch 1, ***dadurch gekennzeichnet,* dass** die Stange (27) eine Schulter (37) zum Verschließen der dritten Öffnung (34) aufweist.

3. Maschine nach Anspruch 2, ***dadurch gekennzeichnet,* dass** der Rohrzylinder (25) des ersten Hydraulikzylinders (10) eine Bohrung (26) aufweist, die in dem Teil, in dem sich die dritte Öffnung (34) befindet, einen Durchmesser (d) besitzt, der kleiner ist als der Durchmesser (D) des Teils, der die erste und die zweite Öffnung (29 und 32) aufweist.

4. Maschine nach den Ansprüchen 2 und 3, ***dadurch gekennzeichnet,* dass** der Durchmesser (d) der Bohrung (26) des Rohrzylinders (25) des ersten Hydraulikzylinders (10) dem Durchmesser der Schulter (37) seiner Stange (27) entspricht.

5. Maschine nach irgend einem der vorhergehenden Ansprüche, ***dadurch gekennzeichnet,* dass** sich die zweite Öffnung (32) und die dritte Öffnung (34) in der Nähe voneinander befinden.

6. Maschine nach Anspruch 5, ***dadurch gekennzeichnet,* dass** sich der Kolben (28) der Stange (27) des ersten Hydraulikzylinders (10) in der Arbeitsstellung zwischen der ersten Öffnung (29) und der zweiten und dritten Öffnungen (32 und 34) befindet.

7. Maschine nach irgend einem der vorhergehenden Ansprüche, ***dadurch gekennzeichnet,* dass** die Stange (27) des ersten Hydraulikzylinders (10) vom Verteiler (31) aus in die beiden Richtungen betätigt werden kann, wenn die dritte Öffnung (34) verschlossen ist.
